# EUROPÄISCHE PATENTSCHRIFT

(11) **EP 2 572 494 B1**
(45) Veröffentlichungstag und Bekanntmachung des Hinweises auf die Patenterteilung: **11.07.2018**
(21) Anmeldenummer: 11760734.1
(22) Anmeldetag: 05.09.2011
(51) Int. Cl.: H04L 29/06, H04L 12/40, G05B 19/418

(54) **VERFAHREN UND SYSTEM ZUR SICHEREN DATENÜBERTRAGUNG MIT EINER VPN- BOX**
METHOD AND SYSTEM FOR SECURE DATA TRANSMISSION WITH A VPN BOX
PROCÉDÉ ET SYSTÈME POUR UNE TRANSMISSION DE DONNÉES SÛRE À L'AIDE D'UNE BOÎTE VPN

(30) Priorität: 30.09.2010 DE 102010041804
(43) Veröffentlichungstag der Anmeldung: 27.03.2013
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2011/065293
(87) Internationale Veröffentlichungsnummer: WO 2012/041654

(56) Entgegenhaltungen:
- WO-A1-2009/043646
- DE-A1- 10 331 309
- US-A1- 2004 010 712
- US-A1- 2008 005 558
- US-A1- 2008 005 791

## Beschreibung

Die vorliegende Erfindung betrifft ein Verfahren, sowie ein System zur sicheren Datenübertragung mit einer Virtual Private Network (VPN) Box.

Offene Kommunikationsprotokolle (Ethernet, IP-Protokoll) werden in industriellen Feldgeräten (Sensor, Aktor, Subsystem-Steuerung) eingesetzt und ersetzen proprietäre Feldbusse. Um die Übertragung von Steuerungs-, Wartungs- und Diagnosedaten gegen Manipulation oder Abhören zu schützen, werden kryptographische Schutzmechanismen verwendet, z.B. MACse, IPsec, SSL/TLS oder WS-Security.

In der US 2004/0010712 A1 wird ein Verfahren und eine Vorrichtung zur sicheren Datenübertragung zwischen einem ersten und einem zweiten Kommunikationsteilnehmer beschrieben, die sich jeweils in einem Intranet befinden, und die Datenübertragung beispielsweise über ein öffentliches Internet läuft. Dabei wird jeweils an der Schnittstelle zwischen Intranet und Internet ein VPN Gateway angeordnet, um die Datenübertragung über eine VPN Verbindung betreiben zu können. Diese VPN Gateways stellen kryptographische Funktionen zum Verschlüsseln und Entschlüsseln von Datenpaketen bereit.

Die WO 2009/043646 A1 beschreibt ein Verfahren zum Aufbau einer sicheren Verbindung über eine VPN Verbindung, zum Beispiel von einem Servicetechniker zu einer Komponente einer Automationsumgebung. Dabei wird zum Aufbau der VPN Verbindung ein zweistufiges Verfahren beschrieben, bei dem der Servicetechniker mittels eines Einmal-Passworts eine sichere Initialverbindung zur Automatisierungsumgebung aufbaut, über die anschließend ein zur Herstellung der sicheren Verbindung mit der Automatisierungsumgebung benötigtes Servicezertifikat von der Automatisierungsumgebung zum Servicetechniker übertragen wird. Mit diesem Servicezertifikat wird dann eine VPN-Verbindung zwischen Servicetechniker und der Komponente in der Automatisierungsumgebung hergestellt.

Die DE 103 31 309 A1 beschreibt eine Vorrichtung, mit der ein oder mehrere Teilnehmer in einem ersten Teilnetz mit einem oder mehreren Teilnehmern in einem zweiten Teilnetz über einen Tunnel gesichert Daten übertragen können. Zum Aufbau eines VPN-Tunnels, wird dabei ein Tunnel-Proxy den Teilnehmern eines Teilnetzes vorgeschalten. Dabei wird durch einen als Projektierungsgerät ausgebildeten Personal Computer bspw. IP Adressen von kommunizierenden Teilnehmern, Netzwerkverbindungen über die diese Kommunikationspartner miteinander verbunden sind, etc. festgelegt. Anhand dieser Festlegungen können Parameter, wie beispielsweise Geheimnisse und/oder Zertifikate für den Aufbau der Tunnels automatisch ermittelt werden. Es ist jedoch oft nicht praktikabel, die erforderliche Funktionalität in ein Feldgerät selbst zu integrieren. Deshalb sind am Markt Virtual Private Network (VPN)- Boxen verfügbar, die einem solchen Feldgerät vorgeschaltet werden können.

Diese verschlüsseln die Datenübertragung eines Feldgeräts. Auf der VPN-Box muss hierzu ein geheimer kryptographischer Schlüssel bzw. ein Passwort konfiguriert und gespeichert werden. Dies ist zeitaufwändig und fehleranfällig. Bei einer Konfiguration der VPN Box und insbesondere der Festlegung von Geheimnissen und Zertifikaten durch ein separates Projektierungsgerät kann dabei nicht gewährleistet werden, dass tatsächlich das gewünschte Feldgerät an der VPN Box angeschlossen ist.

Aufgabe der vorliegenden Erfindung ist es daher, eine VPN-Box zum Schutz von Datenkommunikationsverbindungen mit einer einfach durchzuführenden und manipulations-geschützten Konfiguration zu schaffen.

Diese Aufgabe wird durch Verfahren und Systeme mit den Merkmalen der Ansprüche 1, 4, 5 und 6 gelöst. Vorteilhafte Weiterbildungen der Erfindung sind in den abhängigen Ansprüchen angegeben.

Es wird vorgeschlagen, dass eine einem Feldgerät vorgeschaltete VPN-Box beim Aufbau eines VPN-Tunnels bzw. beim Aufbau einer kryptographisch geschützten Kommunikationsverbindung für die Authentisierung einen geheimen kryptographischen Schlüssel des Feldgerätes verwendet (secret key für ein symmetrisches Kryptoverfahren
wie z.B. DES, AES oder einen private key für ein asymmetrisches Kryptoverfahren wie z.B. RSA, DSA, ECC).

Dieser Schlüssel des Feldgeräts ist auf dem Feldgerät selbst gespeichert, wird jedoch von der VPN-Box genutzt, um eine dem Feldgerät zugeordnete gesicherte Kommunikationsverbindung aufzubauen. Über den VPN-Tunnel werden Datenpakete (Steuerdaten, Überwachungsdaten, Konfigurationsdaten) des Feldgerätes kryptographisch geschützt übertragen und vom bzw. zum Feldgerät weitergeleitet. Der VPN-Tunnel ist also diesem Feldgerät zugeordnet.

Der Schlüssel des Feldgeräts kann durch die VPN-Box zusätzlich oder anstatt eines auf der VPN-Einheit gespeicherten geheimen Schlüssels verwendet werden.

In einer Variante wird ein auf dem Feldgerät gespeicherter Schlüssel verwendet, soweit er verfügbar ist. Andernfalls wird ein auf der VPN-Box gespeicherter Schlüssel verwendet.

In einer Variante fungiert das Feldgerät als "Security Token" ähnlich wie eine in die VPN-Box eingesteckte Chipkarte oder ein USB-Security-Token. Dadurch muss auf der VPN-Box kein geheimer Schlüssel konfiguriert werden. Die Anbindung an das Feldgerät kann über dieselbe Kommunikationsverbindung, über die Datenpakete des Feldgerätes zwischen Feldgerät und der VPN-Box übertragen werden erfolgen, oder alternativ über eine zweite Kommunikationsverbindung (z.B. USB, RS232).

Es kann dabei insbesondere eine Device-Authentication-Funktion des verbundenen Feldgerätes genutzt werden. Insbesondere der zweite Ansatz ermöglicht einen vereinfachten Aufbau des Systems und erhöht die Wartbarkeit der Anlage, da aufgrund von physikalischen Sicherheitsmassnahmen kein separates Schlüsselmaterial zum Schutz (Authentisierung, Integrität, Vertraulichkeit) zwischen der
VPN Box und dem Feldgerät aufgesetzt werden muss.

In einer anderen Variante ist auf der VPN-Box ein dem Feldgerät zugeordneter Schlüssel gespeichert (z.B. aus früherer VPN-Aufbau/Authentisierung gespeichert oder auch manuell konfiguriert).

Dieser gespeicherte Schlüssel wird durch die VPN-Box nur verwendet, wenn das zugeordnete Feldgerät durch die VPN-Box authentisiert wird. D.h. dieser Schlüssel wird nur genutzt, wenn auch tatsächlich das zugeordnete Feldgerät mit der VPN-Box verbunden ist.

In einer Variante ist der Schlüssel mit einem weiteren Schlüssel FDKEK (field device key encryption key) verschlüsselt. Der FDKEK wird der VPN-Box durch das
Feldgerät bereitgestellt, um den auf der VPN-Box gespeicherten VPN-Schlüssel damit zu entschlüsseln.

Bei der Authentisierung des Feldgerätes durch die VPN-Box können weitergehende Prüfungen des Feldgerätes erfolgen, z.B. Abfrage eines Tamper-Sensors oder eines Software-Versionsstand.

Eine VPN-Box erfordert keine Schlüsselkonfiguration, da ein auf dem jeweils verbundenen Feldgerät vorhandener Schlüssel für die VPN-Verbindung genutzt wird. Dadurch kann eine VPN-Box bei einer Erstinstallation oder einem Gerätetausch einfach in Betrieb genommen werden.

Weiterhin muss die VPN-Box nicht über einen sicheren Speicher zum dauerhaften Speichern geheimer kryptographischer Schlüssel verfügen. Dadurch kann sie einfach realisiert werden.

Es wird zudem eine hohe Sicherheit erreicht, da die auf der VPN-Box gespeicherten Schlüssel durch einen Angreifer nicht nutzbar sind, wenn nicht auch das diesen zugehörige Feldgerät verfügbar ist.

Im Folgenden wird die Erfindung mit Ausführungsbeispielen anhand der beigelegten Figuren näher erläutert. Es zeigen:
- Figur 1: in einer schematischen Darstellung ein Ausführungsbeispiel einer VPN- Kommunikationsverbindung,
- Figur 2: in einer schematischen Darstellung ein erstes Ausführungsbeispiel des erfindungsgemäßen Verfahrens,
- Figur 3: in einer schematischen Darstellung ein zweites Ausführungsbeispiel des erfindungsgemäßen Verfahrens.

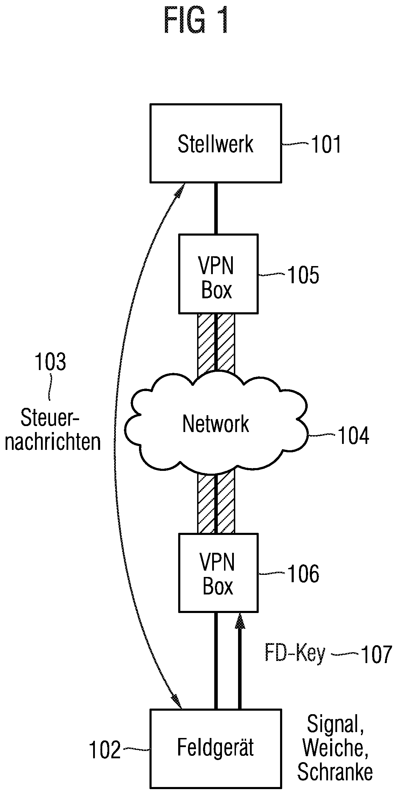

Die Figur 1 zeigt ein Anwendungsbeispiel für einen erfindungsgemäßen industriellen VPN-Tunnel.

Zwischen einem Stellwerk 101 und einem Feldgerät 102 (z.B. Signal, Weiche, Schranke) werden Steuernachrichten 103 ausgetauscht. Die Kommunikation erfolgt z.B. über ein Ethernet-Netzwerk oder ein IP-Netzwerk. Diese Steuernachrichten werden über ein Netzwerk 104 übertragen, das potenziell Angriffen ausgesetzt ist (z.B. ein öffentliches zugängliches Netzwerk, Internet, WLAN, Mobilfunknetzwerk). Deshalb ist am Stellwerk und am Feldgerät jeweils eine VPN-Box 105, 106 vorgesehen, die die Steuernachrichten bei der Übertragung über das Netzwerk (Network) kryptographisch schützt. Dazu kann z.B. ein IPsec, IKE, SSL, TLS, MACsec, L2TP, PPTP Protokoll eingesetzt werden.

Die untere VPN-Box 106, die dem Feldgerät 102 vorgeschaltet ist, verwendet beim VPN-Verbindungsaufbau einen geheimen Schlüssel des Feldgeräts 107 (FD-Key), um einen Sitzungsschlüssel SK zum Schutz der Steuernachrichten einzurichten.

Mehrere Varianten sind möglich, die sich in der Art, wie der geheime Schlüssel des Feldgeräts genutzt wird, unterscheiden:

### Feldgerät als Security Token (kein Schlüssel auf VPN-Box)

Zertifikat und Private Key sind auf dem Feldgerät selbst abgelegt und werden von dort ausgelesen. Die VPN-Box greift auf eine "Chipkarten-Funktionalität" des Feldgerätes zu, um einen dem Feldgerät zugeordneten VPN-Tunnel aufzubauen.

Der Kommunikationskanal zwischen VPN-Box und Feldgerät kann physikalisch geschützt sein, d.h. durch einen Außenstehenden unzugänglich sein. Dies kann über die gleiche physikalische Schnittstelle wie die Steuerdatenkommunikation erfolgen oder über eine separate, zweite Schnittstelle. Optional kann die Kommunikation auf dieser Schnittstelle verschlüsselt sein.

### Field Device Authentication durch VPN-Box

Ein dem Feldgerät zugeordneter Schlüssel auf der VPN-Box wird nur verwendet bzw. freigeschaltet (zur Nutzung freigegeben oder entschlüsselt), wenn die VPN-Box das zugeordnete Feldgerät authentisieren kann. Dies kann bei einem VPN-Aufbau durch einen menschlichen Nutzer mit der Eingabe einer PIN bzw. eines Passworts erfolgen. Ein auf einem Security Token (z.B. auf einer Chipkarte) gespeicherter Schlüssel kann erst genutzt werden, nachdem das Security Token durch die Eingabe der PIN freigeschaltet wurde.

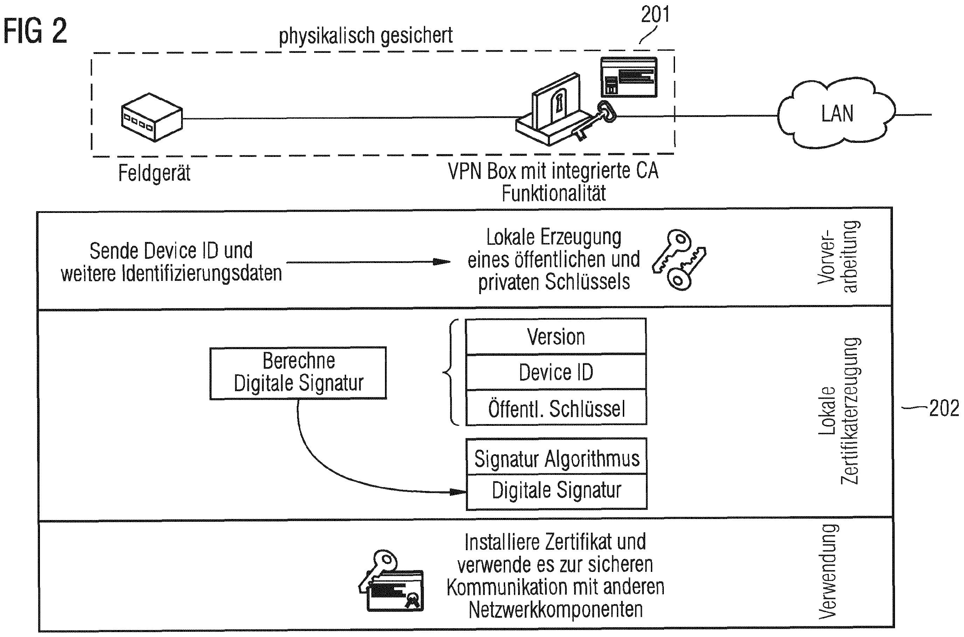

Die Figur 2 zeigt eine Variante, bei der die VPN-Box 201 eine Feldgeräte- Certification Authority (CA) aufweist. Die VPN-Box kann somit ein dem Feldgerät zugeordnetes digitales Zertifikat und Schlüssel 202 erzeugen. Dieses digitale Zertifikat enthält eine Device-ID des Feldgerätes. Die VPN-Box enthält also eine integrierte CA-Funktionalität. Dieses Zertifikat wird nur erzeugt bzw. verwendet, wenn die VPN-Box das entsprechende Feldgerät authentisieren kann.

Dieses digitale Zertifikat kann dauerhaft oder temporär sein. Ein temporäres Zertifikat ist nur für eine einzelne VPN-Session gültig.

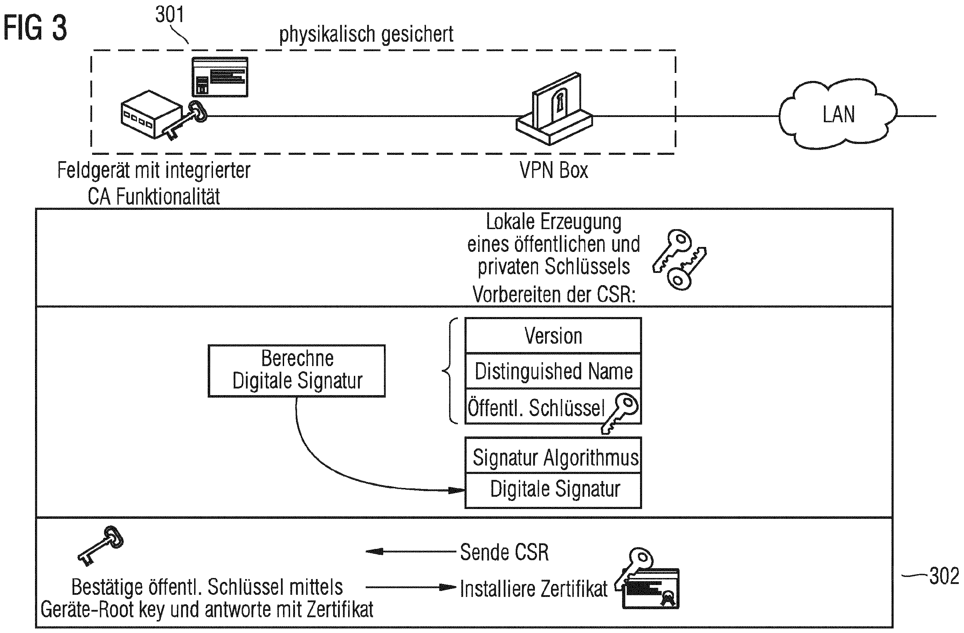

Die Figur 3 zeigt eine weitere Variante, bei der das Feldgerät 301 eine integrierte CA aufweist. Damit kann das Feldgerät zu einem auf der VPN-Box gespeicherten oder erzeugten VPN-Schlüssel ein digitales Zertifikat ausstellen. Dieses digitale Zertifikat wird von der VPN-Box beim Aufbau einer VPN-Verbindung verwendet 302 (Certificate signing request (CSR)).

Insbesondere die letzten beiden Varianten sind besonders administrationsarm, da die Generierung des Schlüsselmaterials und die Zertifizierung autark laufen können, d.h. ohne Eingreifen eines Servicetechnikers. Die VPN Box kann in beiden Fällen auch für die Verbindung von mehreren Feldgeräten genutzt werden. Hier ist dann die entsprechende Schlüsseletablierung jeweils paarweise zwischen der VPN-Box und dem jeweiligen angeschlossenen Feldgerät durchzuführen.

## Patentansprüche

1. Verfahren zur sicheren Datenübertragung zwischen einem ersten (101) und einem zweiten Kommunikationsteilnehmer (102), wobei zumindest einem der Kommunikationsteilnehmer (102) eine Box (106) zum Aufbau und Betreiben einer Virtual Private Network (VPN) Verbindung zugeordnet ist,
**dadurch gekennzeichnet, dass**
durch die Box (106) beim Aufbau der VPN-Verbindung ein geheimer Schlüssel (107) des zugeordneten Kommunikationsteilnehmers (102) ermittelt wird,
durch die Box (106) ein Sitzungsschlüssel anhand des geheimen Schlüssels (107) für die VPN Verbindung eingerichtet wird, die Daten über die VPN- Verbindung sicher übertragen werden, wobei der geheime Schlüssel auf dem zugeordneten Kommunikationsteilnehmer (102) selbst gespeichert ist.

2. Verfahren nach Anspruch 1, wobei
der geheime Schlüssel (107) über eine physikalisch geschützte Kommunikationsverbindung zwischen dem zugeordneten Kommunikationsteilnehmer (102) und der Box (106) ermittelbar ist.

3. Verfahren nach einem der Ansprüche 1 und 2, bei dem der geheime Schlüssel (107) durch die Box (106) zur Entschlüsselung eines auf der Box (106) gespeicherten weiteren Schlüssels herangezogen wird,
der Sitzungsschlüssel anhand des entschlüsselten weiteren Schlüssels eingerichtet wird.

4. Verfahren zur sicheren Datenübertragung zwischen einem ersten (101) und einem zweiten Kommunikationsteilnehmer (102), wobei zumindest einem der Kommunikationsteilnehmer (102) eine Box (106) zum Aufbau und Betreiben einer Virtual Private Network (VPN) Verbindung zugeordnet ist,
**dadurch gekennzeichnet, dass**
durch die Box (106) der zugeordnete Kommunikationsteilnehmer (102) authentisiert wird,
durch die Box (106) ein dem authentisierten Kommunikationsteilnehmer (102) zugeordneter Schlüssel ermittelt wird,
durch die Box (106) ein Sitzungsschlüssel anhand des zugeordneten Schlüssels für die VPN Verbindung eingerichtet wird,
die Daten über die VPN- Verbindung sicher übertragen werden, wobei auf der Box (106) der dem Kommunikationsteilnehmer(102) zugeordnete Schlüssel gespeichert ist und der gespeicherte Schlüssel durch die Box (106) nur verwendet wird, wenn durch die Box (106) der zugeordnete Kommunikationsteilnehmer (102) authentisiert wird.

5. System zur sicheren Datenübertragung, aufweisend
- einen ersten (101) und zweiten Kommunikationsteilnehmer (102) zwischen denen die sichere Datenübertragung durchgeführt wird,
und eine Box (106), welche zumindest einem der Kommunikationsteilnehmer (102) zum Aufbau und Betreiben einer Virtual Private Network (VPN) Verbindung zugeordnet ist, **dadurch gekennzeichnet, dass**
durch die Box (106) beim Aufbau der VPN-Verbindung ein geheimer Schlüssel (107) des zugeordneten Kommunikationsteilnehmers (102) ermittelt wird,
durch die Box (106) ein Sitzungsschlüssel anhand des geheimen Schlüssels (107) für die VPN Verbindung eingerichtet wird, die Daten über die VPN- Verbindung sicher übertragen werden, wobei der geheime Schlüssel (107) auf dem zugeordneten Kommunikationsteilnehmer (102) selbst gespeichert ist.

6. System zur sicheren Datenübertragung, aufweisend
- einen ersten (101) und zweiten Kommunikationsteilnehmer (102) zwischen denen die sichere Datenübertragung durchgeführt wird,
und eine Box (106), welche zumindest einem der Kommunikationsteilnehmer (102) zum Aufbau und Betreiben einer Virtual Private Network (VPN) Verbindung zugeordnet ist, **dadurch gekennzeichnet, dass**
durch die Box (106) der zugeordnete Kommunikationsteilnehmer (102) authentisiert wird,
durch die Box (106) ein dem authentisierten Kommunikationsteilnehmer (102) zugeordneter Schlüssel ermittelt wird,
durch die Box (106) ein Sitzungsschlüssel anhand des zugeordneten Schlüssels für die VPN Verbindung eingerichtet wird,
die Daten über die VPN- Verbindung sicher übertragen werden, wobei auf der Box (106) der dem Kommunikationsteilnehmer (102) zugeordnete Schlüssel gespeichert ist und der gespeicherte Schlüssel durch die Box (106) nur verwendet wird, wenn durch die Box (106) der zugeordnete Kommunikationsteilnehmer (102) authentisiert wird.

## Claims

1. Method for secure data transmission between a first (101) and a second communication device (102), wherein a box (106) for setting up and operating a Virtual Private Network (VPN) link is assigned to at least one of the communication devices (102),
**characterised in that**
a secret key (107) of the assigned communication device (102) is determined by the box (106) during the setup of the VPN link,
a session key is set up for the VPN link by the box (106) on the basis of the secret key (107),
the data is securely transmitted via the VPN link, wherein the secret key is stored on the assigned communication device (102) itself.

2. Method according to claim 1, wherein
the secret key (107) can be determined via a physically protected communication link between the assigned communication device (102) and the box (106).

3. Method according to one of claims 1 and 2, in which the secret key (107) is used by the box (106) to decrypt a further key stored on the box (106),
the session key being set up on the basis of the decrypted further key.

4. Method for secure data transmission between a first (101) and a second communication device (102), wherein a box (106) for setting up and operating a Virtual Private Network (VPN) link is assigned to at least one of the communication devices (102),
**characterised in that**
the assigned communication device (102) is authenticated by the box (106),
a key assigned to the authenticated communication device (102) is determined by the box (106),
a session key is set up for the VPN link by the box (106) on the basis of the assigned key,
the data is securely transmitted via the VPN link, wherein the key assigned to the communication device (102) is stored on the box (106) and the stored key is used by the box (106) only if the assigned communication device (102) is authenticated by the box (106).

5. System for secure data transmission, having
- a first (101) and second communication device (102), between which the secure data transmission is performed,
and a box (106) which is assigned to at least one of the communication devices (102) to set up and operate a Virtual Private Network (VPN) link,
**characterised in that**
a secret key (107) of the assigned communication device (102) is determined by the box (106) during the setup of the VPN link,
a session key is set up for the VPN link by the box (106) on the basis of the secret key (107),
the data is securely transmitted via the VPN link, wherein the secret key (107) is stored on the assigned communication device (102) itself.

6. System for secure data transmission, having
- a first (101) and second communication device (102), between which the secure data transmission is performed,
and a box (106) which is assigned to at least one of the communication devices (102) to set up and operate a Virtual Private Network (VPN) link,
**characterised in that**
the assigned communication device (102) is authenticated by the box (106),
a key assigned to the authenticated communication device (102) is determined by the box (106),
a session key is set up for the VPN link by the box (106) on the basis of the assigned key,
the data is securely transmitted via the VPN link, wherein the key assigned to the communication device (102) is stored on the box (106) and the stored key is used by the box (106) only if the assigned communication device (102) is authenticated by the box (106).

## Revendications

1. Procédé de transmission de données sécurisée entre un premier (101) et un deuxième participant à une communication (102), à au moins un des participants à la communication (102) étant associée une boîte (106) pour l'établissement et l'exploitation d'un réseau virtuel privé (VPN), **caractérisé en ce que** :
- la boîte (106) détermine, lors de l'établissement de la liaison VPN, une clé secrète (107) du participant à la communication associé (102) ;
- la boîte (106) configure une clé de session à l'aide de la clé secrète (107) pour la liaison VPN ;
- les données sont transmises de manière sécurisée via la liaison VPN, la clé secrète étant elle-même stockée sur le participant à la communication associé (102).

2. Procédé selon la revendication 1, la clé secrète (107) pouvant être déterminée via une liaison de communication protégée physiquement entre le participant à la communication associé (102) et la boîte (106).

3. Procédé selon l'une des revendications 1 et 2, dans lequel :
- la boîte (106) fait appel à la clé secrète (107) pour décrypter une autre clé stockée sur la boîte (106) ;
- la clé de session est configurée à l'aide de l'autre clé décryptée.

4. Procédé de transmission de données sécurisée entre un premier (101) et un deuxième participant à une communication (102), à au moins un des participants à la communication (102) étant associée une boîte (106) pour l'établissement et l'exploitation d'un réseau virtuel privé (VPN), **caractérisé en ce que** :
- la boîte (106) authentifie le participant à la communication associé (102) ;
- la boîte (106) détermine une clé associée au participant à la communication authentifié (102) ;
- la boîte (106) configure une clé de session à l'aide de la clé associée pour la liaison VPN ;
- les données sont transmises de manière sécurisée via la liaison VPN, la clé associée au participant à la communication (102) étant stockée sur la boîte (106) et la clé stockée n'étant utilisée par la boîte (106) que si la boîte (106) authentifie le participant à la communication associé (102).

5. Système de transmission de données sécurisée, comportant :
- un premier (101) et un deuxième participant à une communication (102), entre lesquels est effectuée la transmission de données sécurisée, et
- une boîte (106) qui est associée à au moins un des participants à la communication (102) pour l'établissement et l'exploitation d'un réseau virtuel privé (VPN), **caractérisé en ce que** :
- la boîte (106) détermine, lors de l'établissement de la liaison VPN, une clé secrète (107) du participant à la communication associé (102) ;
- la boîte (106) configure une clé de session à l'aide de la clé secrète (107) pour la liaison VPN ;
- les données sont transmises de manière sécurisée via la liaison VPN, la clé secrète (107) étant elle-même stockée sur le participant à la communication associé (102) .

6. Système de transmission de données sécurisée, comportant :
- un premier (101) et un deuxième participant à une communication (102), entre lesquels est effectuée la transmission de données sécurisée, et
- une boîte (106) qui est associée à au moins un des participants à la communication (102) pour l'établissement et l'exploitation d'un réseau virtuel privé (VPN), **caractérisé en ce que** :
- la boîte (106) authentifie le participant à la communication associé (102) ;
- la boîte (106) détermine une clé associée au participant à la communication authentifié (102) ;
- la boîte (106) configure une clé de session à l'aide de la clé associée pour la liaison VPN ;
- les données sont transmises de manière sécurisée via la liaison VPN, la clé associée au participant à la communication (102) étant stockée sur la boîte (106) et la clé stockée n'étant utilisée par la boîte (106) que si la boîte (106) authentifie le participant à la communication associé (102).
